# EUROPEAN PATENT APPLICATION

(11) **EP 4 793 100 A1**
(43) Date of publication of application: **19.08.2026**
(21) Application number: 26157631.8
(22) Date of filing: 10.02.2026
(51) Int. Cl.: B60R 1/26, B60K 35/22, B60K 35/29, B60K 35/81, B60K 35/28, B60K 35/53, B60K 35/55

(54) **IN-VEHICLE SYSTEM, VEHICLE, AND INFORMATION PROCESSING APPARATUS**

(30) Priority: 10.02.2025 JP 2025020357
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

An in-vehicle system includes a display device including a display unit that displays an image captured by a rearview camera, the display device being configured to be switchable between an expanded state that is a state in which the whole of the display unit is exposed so as to be visible, and a housed state that is a state in which only a predetermined region (31a) that is part of the display unit is exposed so as to be visible and a region other than the predetermined region is housed in a housing portion (300), and an information processing apparatus that controls the display device. The information processing apparatus causes the display unit to display the image captured by the rearview camera in the predetermined region in a case where the state of the display device is the housed state when image information is received from the rearview camera.

## Description

### BACKGROUND

### Technical Field

The present disclosure relates to an in-vehicle system, a vehicle, and an information processing apparatus.

### Description of the Related Art

A vehicle including a monitor that displays an image of the back of a vehicle, captured by a rearview camera, is known (see, for example, Patent Literature 1). Further, there is also a known technique for causing a display that functions as an electronic mirror for allowing a driver to confirm the back of a vehicle, to protrude in a front portion in a vehicle interior (see, for example, Patent Literature 2).

### Citation List

### Patent Literature

Patent Literature 1: Japanese Patent Laid-Open No. 2008-037120
Patent Literature 2: Japanese Patent Laid-Open No. 2021-020557

### SUMMARY

An object of the present disclosure is to improve convenience and safety when a driver confirms circumstances of the back of a vehicle with an image captured by a rearview camera.

An in-vehicle system according to a first aspect of the present disclosure may include:
a rearview camera provided in a vehicle and configured to capture an image of the back of the vehicle;
a display device provided in a front portion of a vehicle interior of the vehicle and including a display unit that displays the image captured by the rearview camera, the display device being configured to be switchable between an expanded state that is a state in which the whole of the display unit is exposed so as to be visible, and a housed state that is a state in which only a predetermined region that is part of the display unit is exposed so as to be visible and a region other than the predetermined region in the display unit is housed in a housing portion; and
an information processing apparatus that controls the display device, and
the information processing apparatus may include a controller configured to execute:
   in a case where the state of the display device is the housed state when image information is received from the rearview camera, causing the display unit to display the image captured by the rearview camera in the predetermined region.

A vehicle according to a second aspect of the present disclosure may include the in-vehicle system according to the first aspect of the present disclosure.

An information processing apparatus according to a third aspect of the present disclosure may be an information processing apparatus that controls a display device provided in a front portion of a vehicle interior of a vehicle and including a display unit that displays an image captured by a rearview camera that captures an image of the back of the vehicle, the display device being configured to be switchable between an expanded state that is a state in which the whole of the display unit is exposed so as to be visible, and a housed state that is a state in which only a predetermined region that is part of the display unit is exposed so as to be visible and a region other than the predetermined region in the display unit is housed in a housing portion, and may include
a controller configured to execute:
in a case where the state of the display device is the housed state when image information is received from the rearview camera, causing the display unit to display the image captured by the rearview camera in the predetermined region.

According to the present disclosure, it is possible to improve convenience and safety when a driver confirms circumstances of the back of a vehicle with an image captured by a rearview camera.

### BRIEF DESCRIPTION OF THE DRAWINGS

Fig. 1 is a view illustrating an aspect of a front portion of a vehicle interior of a vehicle according to an embodiment;
Fig. 2 is a view illustrating a schematic configuration of a first display device and its circumference;
Fig. 3 is a view illustrating an aspect of a second display device in a housed state;
Fig. 4 is a view illustrating an aspect of the second display device in an expanded state;
Fig. 5 is a block diagram schematically illustrating an example of a hardware configuration of a system mounted on the vehicle;
Fig. 6 is a block diagram schematically illustrating an example of a functional configuration of an ECU; and
Fig. 7 is a flowchart indicating control flow of the second display device according to the embodiment.

### DESCRIPTION OF THE EMBODIMENTS

In recent years, a system that displays an image of the back of a vehicle captured by a rearview camera provided in the vehicle, at a display provided in a front portion of a vehicle interior of the vehicle, has been applied to a number of vehicles. Here, in some cases, a display device provided in the front portion of the vehicle interior is configured to be switchable between an expanded state and a housed state. Note that the expanded state may be a state in which the whole of the display is exposed so as to be visible. Further, the housed state may be a state in which only a predetermined region that is part of the display is exposed so as to be visible and a region other than the predetermined region in the display is housed in a housing portion.

Here, an in-vehicle system that is one aspect of the present disclosure may include a rearview camera provided in a vehicle and configured to capture an image of the back of the vehicle, a display device provided in a front portion of a vehicle interior of the vehicle and including a display unit that displays the image captured by the rearview camera, the display device being configured to be switchable between an expanded state that is a state in which the whole of the display unit is exposed so as to be visible, and a housed state that is a state in which only a predetermined region that is part of the display unit is exposed so as to be visible and a region other than the predetermined region in the display unit is housed in a housing portion, and an information processing apparatus that controls the display device, and the information processing apparatus may include a controller configured to execute, in a case where the state of the display device is the housed state when image information is received from the rearview camera, causing the display unit to display the image captured by the rearview camera in the predetermined region.

In the in-vehicle system, the information processing apparatus receives the image information regarding the image captured by the rearview camera (hereinafter, may be referred to as a "rearview camera image"). By this means, the controller causes the display unit to display the rearview camera image. In this event, in a case where the display device is in the housed state, if the rearview camera image is displayed at the whole of the display unit including a portion of the display unit, housed in the housing portion, a driver cannot visually confirm the whole of the rearview camera image.

Thus, in a case where the display device is in the housed state when the information processing apparatus receives the image information regarding the rearview camera image, the controller may display the rearview camera image in the predetermined region of the display unit. Even if the display device is in the housed state, the driver can visually confirm the predetermined region in the display unit. Thus, as a result of the rearview camera image being displayed in the predetermined region in the display unit, even if the display device is in the housed state, the driver can visually confirm the whole of the rearview camera image. It is therefore possible to improve convenience and safety when the driver confirms circumstances of the back of the vehicle with the rearview camera image.

A specific embodiment of the present disclosure will be described below based on the drawings. Dimensions, materials, shapes, relative arrangement, and the like, described in the present embodiment do not intend to limit the technical scope of the present disclosure thereto unless otherwise specified.

### <Embodiment>

### (Schematic Configuration of System)

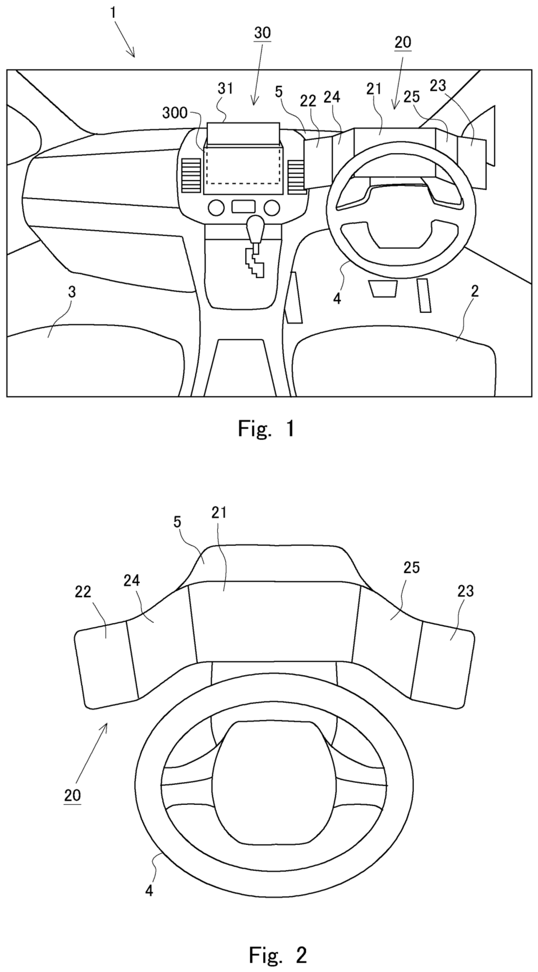

Fig. 1 is a view illustrating an aspect of a front portion of a vehicle interior of a vehicle according to the present embodiment. In the vehicle interior of a vehicle 1, a driver's seat 2 and a passenger's seat 3 are provided. Note that the vehicle 1 of the present embodiment is a right-hand drive vehicle, and the driver's seat 2 is provided on a right side in a traveling direction of the vehicle 1. A steering wheel 4 is disposed in front of the driver's seat 2. The steering wheel 4 may be a circular steering wheel or a U-shaped steering wheel (so-called irregularly shaped steering wheel). The steering wheel 4 is connected to a steering device provided in the vehicle 1 via a steering column. The steering column is covered with a column cover. Further, the passenger's seat 3 is provided on a left side (left side in the traveling direction of the vehicle 1) of the driver's seat 2 in the vehicle interior of the vehicle 1.

A first display device 20 and a second display device 30 are provided in the front portion of the vehicle interior of the vehicle 1. The first display device 20 is provided in front of the driver's seat (in front of the steering wheel 4) in the vehicle interior. The second display device 30 is provided in a substantially central portion (at an intermediate position between the driver's seat 2 and the passenger's seat 3) in the front portion of the vehicle interior.

The first display device 20 includes a meter display 21, an inner display 22, and an outer display 23. The meter display 21 is located in front of the driver's seat 2 (at a substantially central portion in front of the driver's seat 2). The inner display 22 is located on a rear side of the meter display 21 in the vehicle 1 and on an inner side of the vehicle 1. The outer display 23 is located on a rear side of the meter display 21 in the vehicle 1 and on an outer side of the vehicle 1. The inner display 22 is connected to the meter display 21 via a connection portion 24. The outer display 23 is connected to the meter display 21 via a connection portion 25.

Here, the outer side of the vehicle 1 refers to a side closer to the outside of the vehicle 1 as viewed from the driver's seat 2 and refers to a door side of the driver's seat 2. Further, the inner side of the vehicle 1 refers to the passenger's seat 3 side as viewed from the driver's seat 2 and refers to a door side of the passenger's seat 3. For example, in the vehicle 1 in which the steering wheel is provided on a right side of the vehicle 1, the outer side of the vehicle 1 indicates the right side of the vehicle 1, and the inner side of the vehicle 1 indicates a left side of the vehicle 1. Further, for example, in the vehicle 1 in which the steering wheel 4 is provided on the left side of the vehicle 1, the outer side of the vehicle 1 indicates the left side of the vehicle 1, and the inner side of the vehicle 1 indicates the right side of the vehicle 1.

The meter display 21, the inner display 22, and the outer display 23 are all displays including touch panels. Note that it is only necessary that at least the inner display 22 and the outer display 23 include the touch panels. The meter display 21, the inner display 22, and the outer display 23 may be formed by deforming one touch screen or may be formed by combining individual touch screens.

The second display device 30 includes a center display 31. The center display 31 is located at a substantially central portion (intermediate position between the driver's seat 2 and the passenger's seat 3) in the front portion of the vehicle interior. Further, the second display device 30 includes a housing portion 300 for housing the center display 31. As will be described later, a rearview camera image captured by a rearview camera provided in the vehicle 1 is displayed at the center display 31. Further, auxiliary information (for example, car navigation information) regarding driving to be provided to a driver of the vehicle 1 may be displayed at the center display 31. Still further, information regarding entertainment such as audio and TV may be displayed at the center display 31. The center display 31 is also a display including a touch panel in a similar manner to the displays of the first display device 20.

Note that in the present embodiment, the second display device 30 corresponds to a "display device" according to the present disclosure. Further, in the present embodiment, the center display 31 corresponds to a "display unit" according to the present disclosure. However, a position where the "display device" according to the present disclosure is provided is not necessarily limited to the intermediate position between the driver's seat and the passenger's seat.

Note that as a touch panel of each display of the first display device 20 and the second display device, for example, a pressure-sensitive touch panel that detects a pressure when a user presses the panel, a capacitive touch panel that detects change of capacitance when the user presses the panel, or the like, can be employed. Further, the display is, for example, a liquid crystal display (LCD), an electroluminescence (EL) panel, or the like. In the following description, touch by the user means touch on the touch panel by the user.

Here, detailed configurations of the meter display 21, the inner display 22, and the outer display 23 in the first display device 20 will be described based on Fig. 2. Fig. 2 is a view illustrating a schematic configuration of the first display device 20 and its circumference. The meter display 21 of the first display device 20 is fixed to an instrument panel 5. The meter display 21 is a horizontally elongated display, and the inner display 22 and the outer display 23 are vertically elongated displays. The meter display 21 is arranged such that a screen faces rearward of the vehicle and is arranged in parallel to a left and right direction (vehicle width direction) of the vehicle 1. Note that the meter display 21 may be arranged while being inclined to face slightly upward.

One end of the connection portion 24 is connected to an end portion on the vehicle inner side, of the meter display 21, and the inner display 22 is connected to the other end of the connection portion 24. The inner display 22 is a display extending to the rear side of the vehicle 1 and the inner side of the vehicle 1 from the end portion on the vehicle inner side, of the connection portion 24. Note that an angle of the inner display 22 with respect to the meter display 21 is smaller than an angle of the connection portion 24 with respect to the meter display 21. Further, the connection portion 24 is connected to the meter display 21 and the inner display 22 while being curved. The connection portion 24 includes a curved surface that dents on a vehicle front side at a connection portion with the meter display 21 and includes a curved surface that bulges on a vehicle rear side at a connection portion with the inner display 22. Note that the meter display 21 and the inner display 22 may include curved surfaces.

One end of the connection portion 25 is connected to an end portion on a vehicle outer side, of the meter display 21, and the outer display 23 is connected to the other end of the connection portion 25. The outer display 23 is a display extending to the rear side of the vehicle 1 and the outer side of the vehicle 1 from the end portion on the vehicle outer side, of the connection portion 25. Note that an angle of the outer display 23 with respect to the meter display 21 is smaller than an angle of the connection portion 25 with respect to the meter display 21. The connection portion 25 is connected to the meter display 21 and the outer display 23 while being curved. The connection portion 25 includes a curved surface that dents on a vehicle front side at a connection portion with the meter display 21 and includes a curved surface that bulges on a vehicle rear side at a connection portion with the outer display 23. Note that the outer display 23 may include a curved surface.

The steering wheel 4 includes a gripping portion that is a portion to be gripped by the driver. Further, as a result of the meter display 21, the inner display 22, the outer display 23, and the respective connection portions 24, 25 having the shapes as described above in the first display device 20, the inner display 22 and the outer display 23 are arranged in the vicinity of the gripping portion on the steering wheel 4.

Further, each of the inner display 22 and the outer display 23 has an angle with respect to the left and right direction of the steering wheel 4 and is arranged to be inclined toward the steering wheel 4. In other words, the inner display 22 is arranged to protrude more rearward of the vehicle 1 as it goes inward of the vehicle 1, and the outer display 23 is arranged to protrude more rearward of the vehicle 1 as it goes outward of the vehicle 1. In this manner, each of the inner display 22 and the outer display 23 is arranged to face the driver.

The meter display 21 displays information necessary for traveling of the vehicle 1 such as, for example, a speed of the vehicle 1, an engine rotation speed (in a case where the vehicle 1 has an engine), a charging/discharging condition (in a case where the vehicle 1 includes a battery for driving), a traveling distance, and a state of an ADAS.

The inner display 22 displays, for example, information regarding convenience of occupants of the vehicle 1 as content. The information regarding convenience of the occupants of the vehicle 1 includes information for providing entertainment to the occupants of the vehicle 1. The information regarding convenience of the occupants of the vehicle 1 may include information related to comfortability of the occupants, and the like. The information regarding comfortability and convenience of the occupants includes, for example, information regarding switches, buttons, and the like, for performing operation of audio, operation of a navigation device, operation of an air conditioner, operation of a phone, operation of a clock, operation of a voice assistant, and the like, and information regarding operating conditions of these devices.

The outer display 23 displays, for example, information regarding control of the vehicle 1 as content. The information regarding control of the vehicle 1 includes information regarding traveling of the vehicle 1. The information regarding control of the vehicle 1 includes, for example, information regarding switches, buttons, and the like, for performing operation of a headlight, operation of a wiper, operation of a sideview mirror, operation of the ADAS, operation of a drive mode, operation of a vehicle height, operation of a position of the steering wheel, operation of a seat position, and the like, and information regarding operating conditions of these devices.

Note that the information to be displayed at the inner display 22 and the outer display 23 is not limited to the above. The inner display 22 may display the information regarding control of the vehicle 1, and the outer display 23 may display the information regarding convenience of the occupants of the vehicle 1. Further, the information to be displayed at the inner display 22 and the outer display 23 can be freely determined.

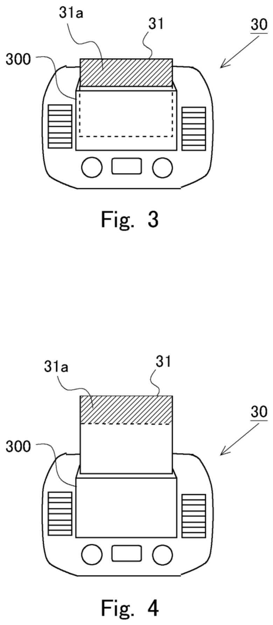

A more detailed configuration of the second display device 30 will be described next based on Fig. 3 and Fig. 4. The second display device 30 is configured to be switchable between an expanded state and a housed state. Fig. 3 is a view illustrating an aspect of the second display device 30 in the housed state. Further, Fig. 4 is a view illustrating an aspect of the second display device 30 in the expanded state.

As described above, the second display device 30 includes the housing portion 300 that houses the center display 31. Further, as illustrated in Fig. 3, when the second display device 30 is in the housed state, the center display 31 is housed in the housing portion 300. However, even when the second display device 30 is in the housed state, a predetermined region 31a (region located in an upper part of the center display 31) that is part of the center display 31 is exposed without being housed in the housing portion 300. In other words, the housed state is a state in which only the predetermined region 31a of the center display 31 is exposed so as to be visible and a region other than the predetermined region 31a in the center display 31 is housed in the housing portion 300.

On the other hand, as illustrated in Fig. 4, when the second display device 30 is in the expanded state, the whole of the center display 31 is exposed without being housed in the housing portion 300. In other words, the expanded state is a state in which the whole of the center display 31 is exposed so as to be visible. Note that Fig. 3 and Fig. 4 illustrate the predetermined region 31a in the center display 31 with a shaded portion. As illustrated in Fig. 3 and Fig. 4, in the second display device 30, the state is switched between the expanded state and the housed state by the center display 31 being vertically driven.

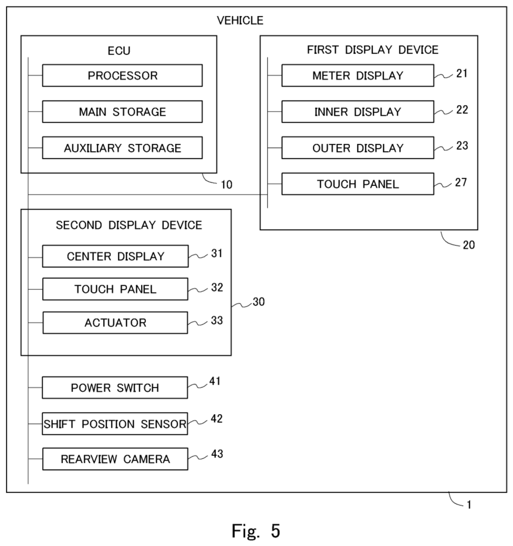

Fig. 5 is a block diagram schematically illustrating an example of a hardware configuration of a system mounted on the vehicle 1. The system mounted on the vehicle 1 includes an ECU 10, the first display device 20, the second display device 30, a power switch 41, a shift position sensor 42, and a rearview camera 43.

The ECU 10 can be constituted as a computer including a processor (such as a CPU and a GPU), a main memory (such as a RAM and a ROM), and an auxiliary memory (such as an EPROM, a hard disk drive, and a removable medium). In the auxiliary memory, an operating system (OS), various kinds of programs, various kinds of tables, and the like, are stored, and respective functions (software modules) matching predetermined purposes as will be described later can be implemented by programs stored therein being executed. However, some or all of the functions may be, for example, implemented as hardware modules by hardware circuits such as an ASIC and an FPGA. The first display device 20, the second display device 30, the power switch 41, the shift position sensor 42, and the rearview camera 43 are connected to the ECU 10. Note that in the present embodiment, the ECU 10 corresponds to an "information processing apparatus" according to the present disclosure.

The first display device 20 includes the meter display 21, the inner display 22, the outer display 23, and a touch panel 27. The touch panel 27 is a unit for detecting touch operation performed on the meter display 21, the inner display 22, and the outer display 23. The touch panel 27 is arranged at each of the meter display 21, the inner display 22, and the outer display 23. By this means, each display is constituted to allow touch operation. The meter display 21, the inner display 22, the outer display 23, the connection portions 24, 25, and the touch panel 27 may be constituted by deforming a shape of one touch screen.

The second display device 30 includes the center display 31, a touch panel 32, and an actuator 33. The touch panel 32 is a unit for detecting touch operation performed on the center display 31. The touch panel 32 is arranged at the center display 31. By this means, the center display 31 is constituted to allow touch operation. The actuator 33 is a device that vertically drives the center display 31. As a result of the center display 31 being vertically driven by the actuator 33, the state of the second display device 30 is switched between the expanded state and the housed state.

The power switch 41 is a switch that switches ON/OFF of a power supply of electrical equipment of the vehicle 1 and a drive source (an internal combustion or a motor) of the vehicle 1. The power switch 41 is arranged in front of the driver's seat 2 in the vehicle interior of the vehicle 1. In a case where the power switch 41 is turned ON from OFF, and in a case where the power switch 41 is turned OFF from ON, a signal is transmitted from the power switch 41 to the ECU 10. The shift position sensor 42 is a sensor that detects a position of a shift lever of the vehicle 1. The position of the shift lever detected by the shift position sensor 42 is input to the ECU 10. The rearview camera 43 is a camera that captures an image of the back of the vehicle 1.

Note that, in addition to the devices as described above, various kinds of sensors for acquiring sensor data to be utilized in traveling of the vehicle 1 and various kinds of electrical equipment to be utilized in the vehicle 1 are connected to the ECU 10. Examples of the various kinds of sensors can include a speed sensor, an acceleration sensor, an accelerator position sensor that detects a position of an accelerator pedal, a brake sensor that detects a position of a brake pedal, a steering wheel angle sensor that detects an angle of the steering wheel, and the like. Further, examples of the various kinds of electrical equipment can include an air conditioner, a navigation device, an audio device, a phone, a wiper, a headlight, a sideview mirror, a powered seat, a voice assistant, and the like.

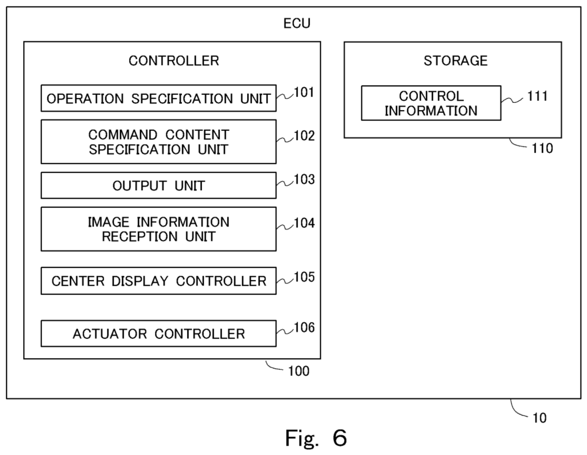

Here, a functional configuration of the ECU 10 will be described based on Fig. 6. Fig. 6 is a block diagram schematically illustrating an example of the functional configuration of the ECU 10. The ECU 10 includes a controller 100 and a storage 110 as functional components. The controller 100 is, for example, a functional component to be provided by the processor executing various kinds of programs stored in an auxiliary storage. The controller 100 includes an operation specification unit 101, a command content specification unit 102, an output unit 103, an image information reception unit 104, a center display controller 105, and an actuator controller 106. The storage 110 is a functional component that stores information. The storage 110 includes a main storage and the auxiliary storage.

The controller 100 executes control of the first display device 20 and the second display device 30 in accordance with input operation by a user who is an occupant of the vehicle 1. Specifically, the first display device 20 accepts a control command from the user via the touch panel 27. In this event, a signal in accordance with input operation on one of the plurality of displays 21, 22, 23 by the user is transmitted from the touch panel 27 to the ECU 10. Further, the second display device 30 accepts a control command from the user via the touch panel 32. In this event, a signal in accordance with input operation on the center display 31 by the user is transmitted from the touch panel 32 to the ECU 10.

Then, in the controller 100 of the ECU 10, the operation specification unit 101 specifies the input operation on one of the displays by the user based on the signal received from the touch panel 27 of the first display device 20 or the touch panel 32 of the second display device 30. For example, the operation specification unit 101 specifies a portion touched by the user on one of the plurality of displays 21, 22, 23 of the first display device 20 or the center display 31 of the second display device 30. Further, the operation specification unit 101 specifies operation content (such as, for example, flick, swipe, tap, pinch, double tap, long tap and multi-tap) of the input operation performed by the user on one of the plurality of displays 21, 22, 23 of the first display device 20 or the center display 31 of the second display device 30.

Further, the storage 110 stores control information 111 indicating control content to be performed on the first display device 20 or the second display device 30. In the storage 110, the control information 111 is stored in association with a portion touched by the user on one of the plurality of displays 21, 22, 23 of the first display device 20 or the center display 31 of the second display device 30 and operation content of the input operation by the user. Then, the command content specification unit 102 specifies command content of the control command accepted from the user by the first display device 20 or the second display device 30 by checking the portion touched by the user and the operation content of the input operation by the user specified by the operation specification unit 101 against the control information 111 stored in the storage 110. If the command content specification unit 102 specifies the command content of the control command, the output unit 103 transmits a control signal in accordance with the specified command content to the first display device 20 or the second display device 30. In the first display device 20 or the second display device 30, control in accordance with the control signal is executed by the control signal transmitted by the output unit 103 being received. Further, there is also a case where the command content of the control command specified by the command content specification unit 102 is a control command issued for a device other than the first display device 20 and the second display device 30. In this case, the output unit 103 transmits a control signal in accordance with the specified command content to the device for which the control command is issued.

Further, in the ECU 10, the image information reception unit 104 receives image information regarding the rearview camera image captured by the rearview camera 43. In the vehicle 1, if the shift position is changed to a reverse position by the driver, this change is detected by the shift position sensor 42. Then, if it is detected by the shift position sensor 42 that the shift position is changed to the reverse position, the image information reception unit 104 receives the image information regarding the rearview camera image from the rearview camera 43. Further, if it is detected by the shift position sensor 42 that the shift position is changed to a position other than the reverse position, reception of the image information from the rearview camera 43 by the image information reception unit 104 is stopped.

If the image information reception unit 104 receives the image information from the rearview camera 43, the center display controller 105 causes the center display 31 of the second display device 30 to display the rearview camera image. In this event, even in a case where another image is displayed at the center display 31, the center display controller 105 causes the center display 31 to preferentially display the rearview camera image. Note that a way of displaying the rearview camera image at the center display 31 will be described in detail later.

The actuator controller 106 controls driving of the actuator 33 of the second display device 30. Here, when the vehicle 1 is not being driven (in a parked state), the second display device 30 is in the housed state. Then, if the power switch 41 is turned ON in the vehicle 1, the actuator controller 106 switches the state of the second display device 30 from the housed state to the expanded state by controlling driving of the actuator 33. Further, if the power switch 41 is turned OFF in the vehicle 1, the actuator controller 106 switches the state of the second display device 30 from the expanded state to the housed state by controlling driving of the actuator 33.

### (Display of Back Camera Image)

Next, a way of displaying the rearview camera image at the center display 31 of the second display device 30 will be described. As described above, when the shift position of the vehicle 1 is the reverse position, the center display controller 105 causes the center display 31 to display the rearview camera image. This allows the driver who tries to move the vehicle 1 backward to grasp an aspect of the back of the vehicle with the rearview camera image.

Here, during driving of the vehicle 1, there is a case where the shift position of the vehicle 1 is changed to the reverse position when the second display device 30 is in the expanded state. As illustrated in Fig. 4, when the second display device 30 is in the expanded state, the whole of the center display 31 is exposed so as to be visible. Thus, in a case where the shift position of the vehicle 1 is changed to the reverse position when the second display device 30 is in the expanded state, the center display controller 105 causes the center display 31 to display the rearview camera image on the whole of the center display 31.

On the other hand, there is also a case where the shift position is changed to the reverse position immediately after the power switch 41 is turned ON in the vehicle 1 in a state where the second display device 30 is in the housed state. In this case, it is considered to perform control so that the rearview camera image is displayed on the whole of the center display 31 after the state of the second display device 30 is changed from the housed state to the expanded state. However, it takes a certain amount of time from when change of the state of the second display device 30 from the housed state to the expanded state is started until the change is completed. Thus, if it is tried to display the rearview camera image at the center display 31 after the state of the second display device 30 is changed from the housed state to the expanded state, it takes time until the driver of the vehicle 1 visually confirms the rearview camera image.

Here, as illustrated in Fig. 3, even when the second display device 30 is in the housed state, the predetermined region 31a in the center display 31 is exposed so as to be visible. Thus, in the present embodiment, in a case where the shift position is changed to the reverse position immediately after the power switch 41 is turned ON in the vehicle 1 in a state where the second display device 30 is in the housed state, change of the state of the second display device 30 from the housed state to the expanded state is temporarily prohibited. By this means, the state of the second display device 30 is maintained in the housed state. Then, the center display controller 105 causes the center display 31 to display the rearview camera image in the predetermined region 31a. According to this, even in a case where the shift position is changed to the reverse position immediately after the power switch 41 is turned ON, it is possible to display the rearview camera image at the center display 31 more promptly.

### (Control Flow)

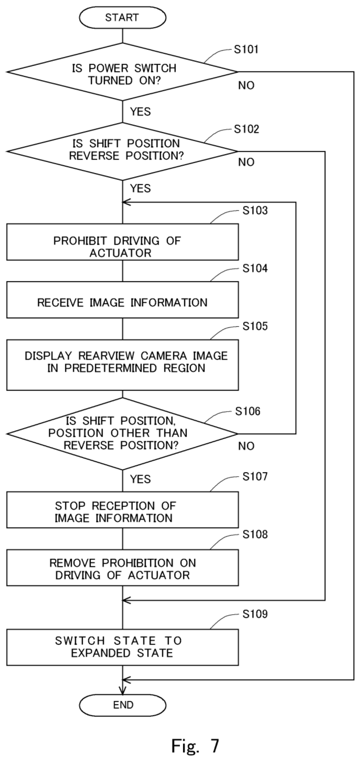

Display control of the rearview camera image at the center display 31 will be described below based on Fig. 7. Fig. 7 is a flowchart indicating control flow of the second display device 30 according to the present embodiment. The present flow is executed by the controller 100 of the ECU 10. Note that execution of the flow indicated in Fig. 7 is started when the vehicle 1 is not being driven (in a parked state) and the second display device 30 is in the housed state.

In the present flow, first, it is determined in S101 whether or not the power switch 41 of the vehicle 1 has been turned ON. In a case where negative determination is made in S101, execution of the present flow ends once. On the other hand, in a case where positive determination is made in S101, the processing of S102 is executed next.

In S102, it is determined whether or not the shift position has been changed to the reverse position based on the detection value of the shift position sensor 42. In a case where negative determination is made in S102, that is, in a case where the shift position is at a position other than the reverse position, the processing of S109 is executed next. In S109, the state of the second display device 30 is switched from the housed state to the expanded state by the actuator controller 106 driving the actuator 33. On the other hand, in a case where positive determination is made in S102, the processing of S103 is executed next.

In S103, driving of the actuator 33 by the actuator controller 106 is prohibited. In other words, switching of the state of the second display device 30 from the housed state to the expanded state is prohibited. Thus, the state of the second display device 30 is maintained in the housed state. Then, in S104, the image information regarding the rearview camera image is received from the rearview camera 43. Note that the processing of S104 is executed by the image information reception unit 104. Then, in S105, the rearview camera image is displayed in the predetermined region 31a of the center display 31 of the second display device 30 in the housed state. Note that the processing of S105 is executed by the center display controller 105.

Then, it is determined in S106 whether or not the shift position has been changed to a position other than the reverse position based on the detection value of the shift position sensor 42. In a case where negative determination is made in S106, that is, in a case where the shift position is maintained in the reverse position, the processing from S103 to S106 is executed again. On the other hand, in a case where positive determination is made in S106, the processing of S107 is executed next.

In S107, reception of the image information from the rearview camera 43 is stopped. Then, in S108, prohibition on driving of the actuator 33 by the actuator controller 106 is removed. In other words, prohibition on switching of the state of the second display device 30 from the housed state to the expanded state is removed. Then, the processing of S109 is executed next.

According to the above-described flow, in a case where the shift position is changed to the reverse position immediately after the power switch 41 is turned ON, the state of the second display device 30 is maintained in the housed state, and the rearview camera image is displayed in the predetermined region 31a of the center display 31. Further, while the shift position is maintained at the reverse position, the state of the second display device 30 is maintained in the housed state, and display of the rearview camera image in the predetermined region 31a of the center display 31 is continued. According to this, the state of the second display device 30 is prevented from being changed while the driver is moving the vehicle 1 backward. It is therefore possible to prevent concentration on vehicle operation by the driver who tries to move the vehicle 1 backward from being disturbed due to the state of the second display device 30 being changed.

### (Modification)

Note that in the vehicle 1, a switch for switching the state of the second display device 30 from the housed state to the expanded state may be provided separately from the power switch 41. For example, a switch that allows touch operation may be displayed at the outer display 23 of the first display device 20. According to this, the outer display 23 is arranged in the vicinity of the gripping portion on the steering wheel 4, and thus, the driver can easily operate the switch.

Further, also in such a case, while the rearview camera image is displayed in the predetermined region 31a of the center display 31 of the second display device 30 in the housed state, even if the switch is turned ON, the state of the second display device 30 is maintained in the housed state. Then, after reception of the image information from the rearview camera 43 is stopped, the state of the second display device 30 is switched from the housed state to the expanded state.

### <Other Embodiments>

The above-described embodiment is merely one example, and the present disclosure can be implemented while change is made as appropriate within a range not deviating from the gist of the present disclosure. Further, the processing and the means described in the present disclosure can be implemented by being freely combined unless technical inconsistencies arise.

Further, the processing described as being performed by one device may be shared and executed by a plurality of devices. Alternatively, the processing described as being performed by different devices may be executed by one device. In a computer system, what kind of hardware configurations (server configurations) are used to implement respective functions can be flexibly changed.

The present disclosure can be also implemented by a computer program implementing the functions described in the above embodiments being supplied to a computer, and one or more processors included in the computer reading and executing the program. Such a computer program may be provided to the computer by a non-transitory computer-readable storage medium that can be connected to a system bus of the computer or may be provided to the computer via a network. The non-transitory computer-readable storage medium includes, for example, any type of disc such as a magnetic disc (such as a Floppy (registered trademark) disc and a hard disc drive (HDD)), and an optical disc (such as a CD-ROM, a DVD disc and a Blu-ray disc), and any type of medium appropriate for storing an electronic command such as a read only memory (ROM), a random access memory (RAM), an EPROM, an EEPROM, a magnetic card, a flash memory, or an optical card.

## Claims

1. An in-vehicle system comprising:
a rearview camera (43) provided in a vehicle and configured to capture an image of the back of the vehicle;
a display device (30) provided in a front portion of a vehicle interior of the vehicle and including a display unit (31) that displays the image captured by the rearview camera (43), the display device (30) being configured to be switchable between an expanded state that is a state in which the whole of the display unit (31) is exposed so as to be visible, and a housed state that is a state in which only a predetermined region that is part of the display unit (31) is exposed so as to be visible and a region other than the predetermined region in the display unit (31) is housed in a housing portion (300); and
an information processing apparatus (10) that controls the display device (30), wherein
the information processing apparatus (10) comprises a controller (100) configured to execute:
in a case where the state of the display device (30) is the housed state when image information is received from the rearview camera (43), causing the display unit (31) to display the image captured by the rearview camera (43) in the predetermined region.

2. The in-vehicle system according to claim 1, wherein the controller (100) prohibits switching of the state of the display device (30) from the housed state to the expanded state while the image captured by the rearview camera (43) is displayed in the predetermined region of the display unit (31) in the display device (30) in the housed state.

3. The in-vehicle system according to claim 2, wherein the controller (100) removes prohibition on switching of the state of the display device (30) from the housed state to the expanded state in a case where reception of the image information from the rearview camera (43) is stopped when switching of the state of the display device (30) from the housed state to the expanded state is prohibited.

4. The in-vehicle system according to claim 1, wherein in the information processing apparatus (10),
the image information is received from the rearview camera (43) when a position of a shift lever of the vehicle is a reverse position, and
reception of the image information from the rearview camera (43) is stopped when the position of the shift lever of the vehicle is changed from the reverse position to another position.

5. The in-vehicle system according to claim 2, wherein the controller (100) receives a signal indicating that a predetermined switch (41) for switching the state of the display device (30) from the housed state to the expanded state is turned ON.

6. The in-vehicle system according to claim 5, wherein the predetermined switch (41) is a power switch (41) of the vehicle.

7. The in-vehicle system according to claim 5, wherein
the display device (30) is a second display device (30), the in-vehicle system further comprises a first display device (20) that includes a pair of display units (22, 23) protruding to a vehicle rear side of an instrument portion (21) disposed in front of a steering wheel (4) in the vehicle interior of the vehicle, the pair of display units (22, 23) being arranged at positions on both sides of the steering wheel (4) and including touch panels (27), and
the predetermined switch is displayed at one of the pair of display units (22, 23) of the first display device.

8. A vehicle including the in-vehicle system according to any one of claims 1 to 7.

9. An information processing apparatus (10) that controls a display device (30) provided in a front portion of a vehicle interior of a vehicle and including a display unit (31) that displays an image captured by a rearview camera (43) that captures an image of the back of the vehicle, the display device (30) being configured to be switchable between an expanded state that is a state in which the whole of the display unit (31) is exposed so as to be visible, and a housed state that is a state in which only a predetermined region that is part of the display unit (31) is exposed so as to be visible and a region other than the predetermined region in the display unit (31) is housed in a housing portion (300),
the information processing apparatus (10) comprising a controller (100) configured to execute:
in a case where the state of the display device (30) is the housed state when image information is received from the rearview camera (43), causing the display unit (31) to display the image captured by the rearview camera (43) in the predetermined region.

10. The information processing apparatus (10) according to claim 9, wherein the controller (100) prohibits switching of the state of the display device (30) from the housed state to the expanded state while the image captured by the rearview camera (43) is displayed in the predetermined region of the display unit (31) in the display device (30) in the housed state.

11. The information processing apparatus (10) according to claim 10, wherein the controller (100) removes prohibition on switching of the state of the display device from the housed state to the expanded state in a case where reception of the image information from the rearview camera (43) is stopped when switching of the state of the display device (30) from the housed state to the expanded state is prohibited.

12. The information processing apparatus (10) according to claim 9, wherein
the image information is received from the rearview camera (43) when a position of a shift lever of the vehicle is a reverse position, and
reception of the image information from the rearview camera (43) is stopped when the position of the shift lever of the vehicle is changed from the reverse position to another position.

13. The information processing apparatus (10) according to claim 10, wherein the controller (100) receives a signal indicating that a predetermined switch (41) for switching the state of the display device (30) from the housed state to the expanded state is turned ON.
